(19) Europäisches Patentamt
European Patent Office
Office européen des brevets

(11) **EP 2 388 292 A1**

(12) **EUROPEAN PATENT APPLICATION**
published in accordance with Art. 153(4) EPC

(43) Date of publication:
**23.11.2011 Bulletin 2011/47**

(51) Int Cl.:
***C08J 9/12*** *(2006.01)*

(21) Application number: **10731231.6**

(22) Date of filing: **12.01.2010**

(86) International application number:
**PCT/JP2010/050219**

(87) International publication number:
**WO 2010/082562 (22.07.2010 Gazette 2010/29)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.01.2009 JP 2009007985**
**16.01.2009 JP 2009008009**

(71) Applicant: **Nitto Denko Corporation**
**Ibaraki-shi**
**Osaka 567-8680 (JP)**

(72) Inventors:
• **YAMAMOTO Takayuki**
**Ibaraki-shi**
**Osaka 567-8680 (JP)**
• **OCHIAI Keiko**
**Ibaraki-shi**
**Osaka 567-8680 (JP)**

• **KANADA Mitsuhiro**
**Ibaraki-shi**
**Osaka 567-8680 (JP)**
• **YASUDA Hironori**
**Ibaraki-shi**
**Osaka 567-8680 (JP)**
• **HIRAO Akira**
**Ibaraki-shi**
**Osaka 567-8680 (JP)**
• **HARADA Masatomi**
**Ibaraki-shi**
**Osaka 567-8680 (JP)**
• **KANZAKITANI Shuhei**
**Ibaraki-shi**
**Osaka 567-8680 (JP)**

(74) Representative: **Grünecker, Kinkeldey,**
**Stockmair & Schwanhäusser**
**Leopoldstrasse 4**
**80802 München (DE)**

(54) **CROSSLINKED RESIN FOAM AND MANUFACTURING METHOD THEREOF**

(57) Disclosed is a resin foam which excels in properties such as strength, flexibility, cushioning properties, and strain recovery, particularly has a cell structure resistant to shrinkage caused by the restoring force of the resin, and has a high expansion ratio.

The cross-linked resin foam is obtained by heating a resin composition containing an elastomer, an active-energy-ray-curable compound, and a thermal crosslinking agent to form a cross-linked structure derived from the thermal crosslinking agent in the resin composition; subjecting the cross-linked-structure-containing resin composition to foam molding to give a foamed structure; and irradiating the foamed structure with an active energy ray to form another cross-linked structure derived from the active-energy-ray-curable compound to give the cross-linked resin foam.

EP 2 388 292 A1

**Description**

Technical Field

The present invention relates to a resin foam excellent in properties such as cushioning properties and compressive strain recovery (compression set recovery), and a process for producing the resin foam. Specifically, the present invention relates to a resin foam and a production process thereof, which resin foam is very useful, typically for electronic appliances, as internal insulators, cushioning materials, sound insulators, and heat insulators; as well as food packaging materials, clothing materials, and building materials, has satisfactory cushioning properties, and excels in compressive strain recovery at high temperatures.

Background Art

Foams to be used, typically for electronic appliances, as internal insulators, cushioning materials, sound insulators, and thermal insulators; as well as food packaging materials, clothing materials, and building materials should excel in properties such as flexibility (softness), cushioning properties, and heat-insulating properties from the viewpoint of securing the sealing properties of such foams when the foams are incorporated as components. Known as such foams are thermoplastic resin foams (thermoplastic resin foams made from thermoplastic resins that do not show rubber elasticity at room temperature) represented by foams of olefinic resins such as polyethylenes and polypropylenes. These foams, however, have poor strengths and are insufficient in flexibility and cushioning properties. In particular, when held under compression at high temperatures, they are poor in strain recovery to cause inferior sealing properties. As an attempt to solve these drawbacks, there has been employed a technique of incorporating, for example, a rubber component into a thermoplastic resin to impart elasticity to the resin. This allow the material resin itself to become flexible and to have restoring force due to elasticity to thereby have improved strain recovery. Though the incorporation of an elastomer component generally improves the restoring ability due to elasticity, the resulting foam shows a low expansion ratio. This is because, once the resin undergoes expansion and deformation by the action of a blowing agent to form a cell structure (bubble structure), the cell structure shrinks due to the restoring force of the resin.

Customary processes for the production of foams include chemical processes and physical processes. A general physical process is performed by dispersing a low-boiling liquid (blowing agent), such as a chlorofluorocarbon or hydrocarbon, in a polymer and then heating the dispersion to volatilize the blowing agent and thereby form cells (bubbles). A chemical process for obtaining a foam is performed by pyrolyzing a compound (blowing agent) added to a polymer base to generate a gas and thereby form cells. However, the technique of physical foaming has various environmental issues such that the substance used as the blowing agent may be harmful and may deplete ozonosphere; while the technique of chemical foaming has a problem that a corrosive gas and impurities remain in the foam after foaming (gas generation), and these cause contamination, but such contamination is undesirable particularly in applications such as electronic components where the contamination should be minimized or avoided.

A process for obtaining a foam having a small cell diameter and a high cell density has been recently proposed. This process includes dissolving a gas such as nitrogen or carbon dioxide in a polymer under a high pressure, subsequently releasing the polymer from the pressure, and heating the polymer to a temperature around the glass transition temperature or softening point of the polymer to thereby form cells. In this foaming technique, a gas such as nitrogen or carbon dioxide is dissolved in a polymer under a high pressure, the polymer is then released from the pressure and, in some cases, is heated to a temperature around the glass transition temperature to allow the growth of cells. This foaming technique has an advantage that a foam having a micro-cell structure which has not been obtained so far may be produced. In the foaming technique, nuclei are formed in a system in a thermodynamically unstable state and these nuclei expand and grow to form cells and thereby give a micro-cellular foam. Various attempts to apply the foaming technique to thermoplastic elastomers such as thermoplastic polyurethanes have been proposed in order to give a flexible foam. For example, Patent Literature (PTL) 1 discloses a process for producing a foam that contains uniform and fine cells and is resistant to deformation, by foaming a thermoplastic polyurethane resin according to the above-mentioned foaming technique.

However, a sufficiently high expansion ratio has not been obtained according to the foaming process. Specifically, after the release of pressure (decompression) to reach an atmospheric pressure, nuclei formed by the gas dissolved in the polymer expand and grow to form cells, and a foam with a high expansion ratio is once formed. However, the gas such as nitrogen or carbon dioxide remained in the cells gradually passes through the polymer walls, whereby the polymer cells shrink after foaming (expansion). The cells thereby gradually deform and/or shrink to fail to maintain the initial high expansion ratio.

Citation List

Patent Literature

PTL 1: Japanese Unexamined Patent Application Publication (JP-A) No. H10-168215

Summary of Invention

Technical Problem

Accordingly, an object of the present invention is to provide a resin foam which excels in properties such as strength, flexibility, cushioning properties, and strain recovery, particularly has a cell structure resistant to shrinkage caused by the restoring force of the resin, and thereby has a high expansion ratio.
Another object of the present invention is to provide a process for producing a resin foam which excels in properties such as strength, flexibility, cushioning properties, and strain recovery, particularly has a cell structure resistant to shrinkage caused by the restoring force of the resin, and thereby has a high expansion ratio.

After intensive investigations to achieve the objects, the present inventors have found that the compressive strain recovery of a resin foam prepared by foam molding of a resin composition may be improved by subjecting the raw material resin composition to crosslinking to form a cross-linked structure therein and then subjecting the resin composition to foam molding to give a foamed structure; and thereafter forming another cross-linked structure in the foamed structure, to carry out the foam molding of the foamed structure efficiently. The present invention has been made based on these and further findings. In addition, the present inventors have found that the compressive strain recovery of a resin foam prepared by foam molding of a resin composition may be improved by specifying the strain hardening modulus and uniaxial elongational viscosity, and strain of the raw material resin composition at a foam-molding temperature and by subjecting the resin composition to crosslinking to form a cross-linked structure therein and then subjecting the resin composition to foam molding to give a foamed structure; and thereafter forming another cross-linked structure in the foamed structure, to carry out the foam molding of the foamed structure efficiently.

Specifically, the present invention provides, in an aspect, a cross-linked resin foam obtained by heating a resin composition containing an elastomer, an active-energy-ray-curable compound, and a thermal crosslinking agent to form a cross-linked structure derived from the thermal crosslinking agent in the resin composition to thereby give a cross-linked-structure-containing resin composition; subjecting the cross-linked-structure-containing resin composition to foam molding to give a foamed structure; and irradiating the foamed structure with an active energy ray to form another cross-linked structure derived from the active-energy-ray-curable compound in the foamed structure to give the cross-linked resin foam.

In an embodiment of the cross-linked resin foam, the resin composition containing the elastomer, the active-energy-ray-curable compound, and the thermal crosslinking agent may have a strain hardening modulus $\alpha$ of 0.5 to 1.5 as determined from a uniaxial elongational viscosity in uniaxial elongation at a foam-molding temperature and at a strain rate of 0.1 [l/s] and may have an elongational viscosity $\eta$ of from 26000 [Pa•s] to 600000 [Pa•s] 2.5 seconds after the uniaxial elongation and a strain $\varepsilon$ of from 1.3 to 3 in the uniaxial elongation.

In another embodiment, the cross-linked resin foam may have a density of from 0.01 to 0.2 g/cm$^3$

In yet another embodiment, the cross-linked resin foam may have an expansion ratio of from 5 to 110 times.

In still another embodiment of the cross-linked resin foam, the foam molding of the cross-linked-structure-containing resin composition may be performed by molding the cross-linked-structure-containing resin composition to give an unfoamed resin molded article, impregnating the unfoamed resin molded article with a blowing agent, and subjecting the impregnated unfoamed resin molded article to decompression to expand the unfoamed resin molded article.

In another embodiment of the cross-linked resin foam, the thermal crosslinking agent may be an isocyanate compound.

In yet another embodiment of the cross-linked resin foam, carbon dioxide or nitrogen may be used as the blowing agent in the foam molding of the cross-linked-structure-containing resin composition.

In still another embodiment of the cross-linked resin foam, a fluid in a supercritical state is used as the blowing agent in the foam molding of the cross-linked-structure-containing resin composition.

The present invention provides, in another aspect, a process for producing a cross-linked resin foam, the process including the steps of heating a resin composition containing an elastomer, an active-energy-ray-curable compound, and a thermal crosslinking agent to form a cross-linked structure derived from the thermal crosslinking agent in the resin composition to give a cross-linked-structure-containing resin composition; subjecting the cross-linked-structure-containing resin composition to foam molding to give a foamed structure; and irradiating the foamed structure with an active energy ray to form another cross-linked structure derived from the active-energy-ray-curable compound in the foamed structure to give the cross-linked resin foam.

In an embodiment of the process for producing a cross-linked resin foam, the resin composition containing the elastomer, the active-energy-ray-curable compound, and the thermal crosslinking agent may have a strain hardening modulus $\alpha$ of 0.5 to 1.5 as determined from a uniaxial elongational viscosity in uniaxial elongation at a foam-molding temperature and at a strain rate of 0.1 [l/s] and may have an elongational viscosity $\eta$ of from 26000 [Pa•s] to 600000 [Pa•s] 2.5 seconds after the uniaxial elongation and a strain $\varepsilon$ of from 1.3 to 3 in the uniaxial elongation.

In yet another embodiment, the produced cross-linked resin foam may have a density of from 0.01 to 0.2 g/cm$^3$.

In still another embodiment, the produced cross-linked resin foam may have an expansion ratio of from 5 to 110 times.

In another embodiment of the process for producing a cross-linked resin foam, the step of subjecting the cross-linked-structure-containing resin composition to foam molding may be performed while using carbon dioxide or nitrogen as a blowing agent.

In yet another embodiment of the process for producing a cross-linked resin foam, the step of subjecting the cross-linked-structure-containing resin composition to foam molding may be performed while using a fluid in a supercritical state as a blowing agent.

Advantageous Effects of Invention

The cross-linked resin foam according to embodiments of the present invention having the above-mentioned configuration is advantageous, because the cross-linked resin foam excels in properties such as strength, flexibility, cushioning properties, and strain recovery, particularly has a cell structure resistance to shrinkage caused by restoring force of the resin, and thereby has a high expansion ratio. The process for producing a cross-linked resin foam, according to the present invention, enables efficient production of an advantageous cross-linked resin foam, because the cross-linked resin foam excels in properties such as strength, flexibility, cushioning properties, and strain recovery, particularly has a cell structure resistance to shrinkage caused by restoring force of the resin, and thereby has a high expansion ratio.

Brief Description of Drawings

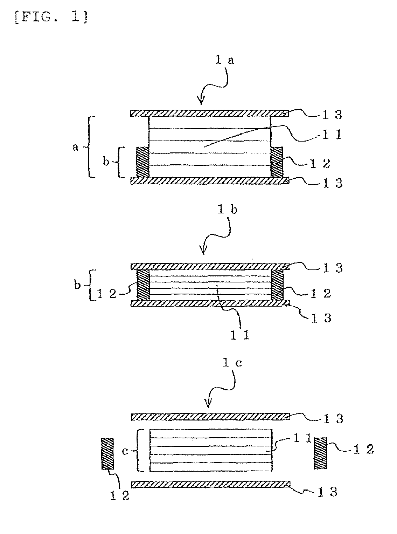

[Fig. 1] Fig. 1 is a diagram illustrating how to measure a strain recovery rate (80°C, 50% compression set). Description of Embodiments

A cross-linked resin foam according to an embodiment of the present invention is obtained by heating a resin composition containing an elastomer, an active-energy-ray-curable compound, and a thermal crosslinking agent to form a cross-linked structure derived from the thermal crosslinking agent in the resin composition to thereby give a cross-linked-structure-containing resin composition; subjecting the cross-linked-structure-containing resin composition to foam molding to give a foamed structure; and irradiating the foamed structure with an active energy ray to form another cross-linked structure derived from the active-energy-ray-curable compound in the foamed structure to give the cross-linked resin foam. As used herein the term "resin composition containing an elastomer, an active-energy-ray-curable compound, and a thermal crosslinking agent" is also simply referred to as a "resin composition."

(Resin Composition)

The resin composition is a composition containing at least an elastomer, an active-energy-ray-curable compound, and a thermal crosslinking agent and serves as a raw material for the cross-linked resin foam. According to the present invention, the cross-linked resin foam is obtained by heating the resin composition to form a cross-linked structure derived from the thermal crosslinking agent; subjecting the cross-linked-structure-containing resin composition to foam molding to give a foamed structure; and irradiating the foamed structure with an active energy ray to cure the active-energy-ray-curable compound to thereby form another cross-linked structure in the foamed structure. The production process may give a cross-linked resin foam from the resin composition, which cross-linked resin foam excels in properties such as strength, flexibility, cushioning properties, and strain recovery.

As used herein the term "resin composition which is obtained by heating the resin composition (resin composition containing an elastomer, an active-energy-ray-curable compound, and a thermal crosslinking agent) and which contains a cross-linked structure derived from the thermal crosslinking agent" is also referred to as a "cross-linked-structure-containing resin composition" or "composition for the cross-linked resin foam." As used herein the term "cross-linked structure" refers to a foam which is obtained after subjecting such a cross-linked-structure-containing resin composition to foam molding and which is before the formation of a cross-linked structure derived from the active-energy-ray-curable compound.

Though the elastomer to be contained as a principal component in the resin composition is not limited, as long as having rubber-like elasticity at normal temperature (at room temperature), examples thereof include acrylic thermoplastic elastomers, urethane thermoplastic elastomers, styrenic thermoplastic elastomers, polyester thermoplastic elastomers, polyamide thermoplastic elastomers, and polyolefin thermoplastic elastomers. Among them, acrylic thermoplastic elastomers and urethane thermoplastic elastomers are preferred. Each of different elastomers may be used alone or in combination.

The acrylic thermoplastic elastomers are acrylic polymers (homopolymers or copolymers) each using one or more types of acrylic monomers as monomer components. Among them, those each having a low glass transition temperature (e.g., those each having a glass transition temperature of 0°C or lower) are preferred.

Of acrylic monomers, preferred are alkyl acrylates each having a linear, branched chain, or cyclic alkyl group. Exemplary alkyl acrylates include ethyl acrylate (EA), butyl acrylate (BA), 2-ethylhexyl acrylate (2-EHA), isooctyl acrylate, isononyl acrylate, propyl acrylate, isobutyl acrylate, hexyl acrylate, and isobornyl acrylate (IBXA).

The acrylic monomers (particularly the alkyl acrylates) are used as main monomer components in the acrylic thermoplastic elastomer and it is important that they occupy 50 percent by weight or more, and preferably 70 percent by weight or more, of the total monomer components constituting the acrylic thermoplastic elastomer.

The acrylic thermoplastic elastomer, when being a copolymer, may further include one or more additional monomer components copolymerizable with the alkyl acrylates according to necessity. Each of different additional monomer components may be used alone or in combination.

Exemplary preferred additional monomer components include functional-group-containing monomers copolymerizable with the alkyl acrylates. The term "functional-group-containing monomer" refers to a monomer which is a monomer component for constituting a thermoplastic elastomer and which gives a functional group in the thermoplastic elastomer obtained through copolymerization of the monomer with the main monomer component, which functional group is reactive with the functional group of the after-mentioned thermal crosslinking agent. As used herein a "functional group of the thermoplastic elastomer, which functional group is reactive with the functional group of the after-mentioned thermal crosslinking agent" is also referred to as a "reactive functional group."

Examples of the functional-group-containing monomers include carboxyl-containing monomers such as methacrylic acid (MAA), acrylic acid (AA), and itaconic acid (IA); hydroxyl-containing monomers such as hydroxyethyl methacrylate (HEMA), 4-hydroxybutyl acrylate (4HBA), and hydroxypropyl methacrylate (HPMA); amino-containing monomers such as dimethylaminoethyl methacrylate (DM); amido-containing monomers such as acrylamide (AM) and methylolacrylamide (N-MAN); epoxy-containing monomers such as glycidyl methacrylate (GMA); acid-anhydride-group-containing monomers such as maleic anhydride; and cyano-containing monomers such as acrylonitrile (AN). Among them, carboxyl-containing monomers (e.g., methacrylic acid (MAA) and acrylic acid (AA)) and hydroxyl-containing monomers (e.g., 4-hydroxybutyl acrylate (4HBA)) are preferred for easy crosslinking, of which acrylic acid (AA) and 4-hydroxybutyl acrylate (4HBA) are more preferred.

The amount of functional-group-containing monomers is typically from 0 to 20 percent by weight, and preferably from 1 to 20 percent by weight, based on the total amount of monomer components constituting the acrylic thermoplastic elastomer. Functional-group-containing monomers, if used in an amount of more than 20 percent by weight, may cause excessive reactions and thereby cause gelation. In contrast, functional-group-containing monomers, if used in an amount of less than 1 percent by weight, may cause an excessively low crosslink density to thereby adversely affect the properties of the foam.

Examples of other additional monomer components (comonomers) than the functional-group-containing monomers include vinyl acetate (VAc), styrene (St), methyl methacrylate (MMA), methyl acrylate (MA), and methoxyethyl acrylate (MEA). Among them, methoxyethyl acrylate (MEA) is preferred for satisfactory low-temperature performance.

The amount of such comonomers is typically from 0 to 50 percent by weight, and preferably from 0 to 30 percent by weight, based on the total amount of monomer components constituting the acrylic thermoplastic elastomer. Comonomers, if used in an amount of more than 50 percent by weight, may adversely affect the properties of the foam with time.

The urethane thermoplastic elastomers for use herein are not limited and can be any of resins prepared through urethanization reaction between an isocyanate compound and a polyol compound. Urethane thermoplastic elastomers each having a reactive functional group may also be used.

Examples of the isocyanate compounds include diisocyanate compounds such as tolylene diisocyanate, diphenylmethane diisocyanate, hexamethylene diisocyanate, naphthalene diisocyanate, isophorone diisocyanate, and xylene diisocyanate. Of these, preferred examples include diphenylmethane diisocyanate and hexamethylene diisocyanate. Each of different isocyanate compounds may be used alone or in combination.

Exemplary polyol compounds include polyesterpolyol compounds each obtained by a condensation reaction of a polyhydric alcohol (e.g., ethylene glycol, propylene glycol, butanediol, butenediol, hexanediol, pentanediol, neopentyldiol, or pentanediol) with an aliphatic dicarboxylic acid (e.g., adipic acid, sebacic acid, azelaic acid, or maleic acid) or an aromatic dicarboxylic acid (e.g., terephthalic acid or isophthalic acid); polyetherpolyol compounds such as poly (ethylene ether) glycol, poly(propylene ether) glycol, poly(tetramethylene ether) glycol, and poly(hexamethylene ether) glycol; lactone polyol compounds such as poly(caprolactone) glycol, poly(propiolactone) glycol, and poly(valerolactone) glycol; and polycarbonatepolyol compounds each obtained through a dealcoholization reaction of a polyhydric alcohol (e.g., ethylene glycol, propylene glycol, butanediol, pentanediol, octanediol, or nonanediol) typically with diethylene carbonate or dipropylene carbonate. Low-molecular-weight diols such as polyethylene glycols may also be used. Of these, polyesterpolyol compounds and polyetherpolyol compounds are preferred. Each of different polyol compounds may be used alone or in combination.

Such a urethane thermoplastic elastomer having a reactive functional group may be prepared, for example, by a process in which an isocyanate compound is used in polymerization in excess to the equimolar amount with respect to a polyol compound to thereby allow isocyanate groups to remain in the resulting polymer.

The thermal crosslinking agent may be any multifunctional compound which reacts with a reactive functional group (e.g., active hydrogen) contained in the resin composition. Examples of such thermal crosslinking agents include polyisocyanates such as diphenylmethane diisocyanate, tolylene diisocyanate, and hexamethylene diisocyanate; and polyamines such as hexamethylenediamine, triethylenetetramine, tetraethylenepentamine, hexamethylenediamine carbamate, N,N'-dicinnarnylidene-1,6-hexanediamine, 4,4'-methylenebis(cyclohexylamine) carbamate, and 4,4'-(2-chloroaniline). Each of different thermal crosslinking agents may be used alone or in combination.

Of these thermal crosslinking agents, isocyanate compounds are preferred for their high reactivity.

The thermal crosslinking agents may be used while being suitably adjusted so as to give desired properties as mentioned later. Though not critical, the amount of thermal crosslinking agents is generally from about 0.01 to about 10 parts by weight, preferably from about 0.02 to about 8 parts by weight, and more preferably from about 0.05 to about 5 parts by weight, per 100 parts by weight of the elastomer in the resin composition.

The presence of the thermal crosslinking agent in the resin composition allows the formation of a cross-linked structure in the resin composition through heating of the resin composition. The foam molding of the resin composition containing such a cross-linked structure (cross-linked-structure-containing resin composition) gives a foamed structure, in which the cross-linked structure formed through thermal crosslinking is maintained. The formation of the cross-linked structure advantageously helps the resin foam to have higher shape retention and protects the cell structure from deformation and shrinkage with time.

The active-energy-ray-curable compound is not limited, as long as being a compound curable through the irradiation with an active energy ray. Among such compounds, preferred are polymerizable unsaturated compounds which are nonvolatile and have a low molecular weight in terms of weight-average molecular weight of 10000 or less. Of the active-energy-ray-curable compounds, preferred are ultraviolet-curable compounds that are curable by the irradiation with an ultraviolet ray. The presence of the active-energy-ray-curable compound in the resin composition gives another cross-linked structure by irradiating a foamed structure with an active energy ray to react (to cure) the active-energy-ray-curable compound, which foamed structure is obtained through foam molding of the cross-linked-structure-containing resin composition. Thus, the cross-linked resin foam according to the present invention includes both a cross-linked structure derived from the thermal crosslinking agent and another cross-linked structure derived from the active-energy-ray-curable compound. This further helps the cross-linked resin foam to have further higher shape retention, to be further resistant to deformation and shrinkage of the cell structure with time and allows the cross-linked resin foam to excel also in strain recovery after compression at high temperatures and to maintain a high expansion ratio that has been achieved by foaming.

Examples of the polymerizable unsaturated compounds include esters of (meth)acrylic acid with polyhydric alcohols, such as phenoxypolyethylene glycol (meth)acrylate, ε-caprolactone (meth)acrylate, polyethylene glycol di (meth)acrylate, polypropylene glycol di(meth)acrylate, 1,4-butanediol di(meth)acrylate, tetraethylene glycol di(meth) acrylate, 1,6-hexanediol di(meth)acrylate, trimethylolpropane tri(meth)acrylate, tetramethylolmethane tetra(meth)acrylate, pentaerythritol tri(meth)acrylate, pentaerythritol tetra(meth)acrylate, and neopentyl glycol di(meth)acrylate; urethane (meth)acrylates; multifunctional urethane acrylates; epoxy (meth)acrylates; and oligo-ester (meth)acrylates. The polymerizable unsaturated compounds may each be a monomer or an oligomer. As used herein the term "(meth)acrylic" refers to "acrylic and/or methacrylic", and others are the same.

The amount of active-energy-ray-curable compounds in the resin composition is not critical, as long as a cross-linked structure may be formed in a foamed structure by irradiating the foamed structure with an active energy ray, which foamed structure is obtained through foam molding of the cross-linked-structure-containing resin composition. Typically, the amount of the polymerizable unsaturated compound(s), when used as the active-energy-ray-curable compound, is typically from 3 to 120 parts by weight, and preferably from 20 to 100 parts by weight, per 100 parts by weight of the elastomer. The active-energy-ray-curable compound(s), if used in an excessively large amount (e.g., if the polymerizable unsaturated compound(s) is used in an amount of more than 120 parts by weight per 100 parts by weight of the elastomer), may cause the cross-linked resin foam to be excessively hard (rigid) to thereby have insufficient cushioning properties.

In contrast, the active-energy-ray-curable compound(s), if used in an excessively small amount (e.g., if the polymerizable unsaturated compound(s) is used in an amount of less than 3 parts by weight per 100 parts by weight of the elastomer), may cause the cross-linked resin foam to fail to maintain a high expansion ratio. Each of different active-energy-ray-curable compounds may be used alone or in combination.

The combination between an elastomer and an active-energy-ray-curable compound is preferably such a combination that the elastomer has a solubility parameter (SP) $\delta_1$ [(J/cm$^3$)$^{1/2}$], the active-energy-ray-curable compound has a solubility parameter (SP) $\delta_2$ [(J/cm$^3$)$^{1/2}$], and the difference $\Delta\delta$ ($\delta_1$-$\delta_2$) between the two solubility parameters falls within $\pm2.5$ [(J/cm$^3$)$^{1/2}$]; and is more preferably such a combination that the difference falls within $\pm2$ [(J/cm$^3$)$^{1/2}$]). Such a preferred combination between the elastomer and the active-energy-ray-curable compound results in very good miscibility (compatibility) between the elastomer and the active-energy-ray-curable compound, and this allows the active-energy-ray-curable compound to be present in a larger relative amount with respect to the elastomer in the resin composition. Typically, when the elastomer and the polymerizable unsaturated compound are used in such a suitable combination, the polymerizable unsaturated compound may be used in an amount of 3 to 150 parts by weight, and preferably 5 to 120 parts by weight, per 100 parts by weight of the elastomer in the resin composition as a raw material for the cross-linked resin foam.

The suitable combination between an elastomer and an active-energy-ray-curable compound allows the active-energy-ray-curable compound to be used in a larger relative amount with respect to the elastomer and thereby allows the cross-linked resin foam to be more stable in its shape (to show higher shape retention). In addition, when the active-energy-ray-curable compound is reacted to form a cross-linked structure, the superior miscibility between the two components allows a molecular chain of the elastomer and a network of the active-energy-ray-curable compound to form an interpenetrating polymer network (IPN), and this also helps the foam to show higher shape retention.

The solubility parameters (SP) are values determined by calculation according to the Fedors' method. According to the calculating expression of the Fedors' method, a solubility parameter (SP) is determined by dividing the sum of molar cohesive energy of respective atom groups by the volume; and obtaining the square root of the divided value. The solubility parameter indicates a polarity per unit volume.

The resin composition may further contain one or more photoinitiators (photopolymerization initiators). When the resin composition further containing a photoinitiator gives a cross-linked-structure-containing resin composition, and the cross-linked-structure-containing resin composition is subjected to foam molding to give a foamed structure, the presence of the photoinitiator facilitates the formation of a cross-linked structure by irradiating the foamed structure with an active energy ray and thereby reacting the active-energy-ray-curable compound in the foamed structure.

The photoinitiator for use herein is not specifically limited and may be freely chosen from among various photoinitiators. Exemplary photoinitiators include benzoin ether photoinitiators such as benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether; acetophenone photoinitiators such as 2,2-diethoxyacetophenone, 2,2-dimethoxy-2-phenylacetophenone, 1-hydroxycyclohexyl phenyl ketone, 4-phenoxydichloroacetophenone, and 4-t-butyl-dichloroacetophenone; $\alpha$-ketol photoinitiators such as 2-methyl-2-hydroxypropiophenone and 1-[4-(2-hydroxyethyl)-phenyl]-2-hydroxy-2-methylpropan-1-one; aromatic sulfonyl chloride photoinitiators such as 2-naphthalenesulfonyl chloride; photoactive oxime photoinitiators such as 1-phenyl-1,1-propanedione-2-($\alpha$-ethoxycarbonyl)-oxime; benzoin photoinitiators such as benzoin; benzil photoinitiators such as benzil (dibenzoyl); benzophenone photoinitiators such as benzophenone, benzoylbenzoic acid, 3,3'-dimethyl-4-methoxybenzophenone, polyvinylbenzophenone, and $\alpha$-hydroxycyclohexyl phenyl ketone; ketal photoinitiators such as benzyl dimethyl ketal; thioxanthone photoinitiators such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone; $\alpha$-aminoketone photoinitiators such as 2-methyl-1-[4-(methylthio)phenyl]-2-morpholinopropan-1-one and 2-benzyl-2-dimethylamino-1-(4-morpholinophenyl)-butanone-1; and acylphosphine oxide photoinitiators such as 2,4,6-trimethylbenzoyldiphenylphosphine oxide and bis(2,4,6-trimethylbenzoyl)-phenylphosphine oxide.

Though not critical, the amount of photoinitiators may be chosen within the range of typically from 0.01 to 5 parts by weight, and preferably from 0.2 to 4 parts by weight, per 100 parts by weight of the elastomer in the resin composition. Each of different photoinitiators may be used alone or in combination.

In an embodiment of the present invention, the cross-linked resin foam may further include powder particles. The powder particles may function as a nucleator in foam molding. The presence of powder particles therefore gives a satisfactorily expanded cross-linked resin foam. Exemplary powder particles include powdery substances such as talc, silica, alumina, zeolite, calcium carbonate, magnesium carbonate, barium sulfate, zinc oxide, titanium oxide, aluminum hydroxide, magnesium hydroxide, clays (e.g., mica and montmorillonite), carbon particles, glass fibers, and carbon tubes. Each of different types of powder particles may be used alone or in combination.

Powdery particles having an average particle diameter (particle size) of from about 0.1 to about 20 $\mu$m are preferably used as the powder particles herein. Powder particles, if having an average particle diameter of less than 0.1 $\mu$m, may not sufficiently function as a nucleator; and powder particles, if having a particle size of more than 20 $\mu$m, may

cause gas escape during foam molding, thus being undesirable.

Though not critical, the amount of powder particles may be suitably chosen within the range of typically from 5 to 150 parts by weight, and preferably from 10 to 120 parts by weight, per 100 parts by weight of the elastomer. Powder particles, if used in an amount of less than 5 parts by weight per 100 parts by weight of the elastomer, may not sufficiently contribute to the formation of a uniform foam. In contrast, powder particles, if used in an amount of more than 150 parts by weight, may cause the resin composition to have a remarkably high viscosity and may cause gas escape during foam molding to impair foaming properties.

The cross-linked resin foam has a characteristic property (also a drawback) of being flammable, because it is composed of an elastomer. It is therefore preferred to incorporate any of flame-retardant powder particles (such as powdery flame retardants) as the powder particles in the resin composition, especially for applications in which impartation of flame retardancy is indispensable, as in electric/electronic appliances. The cross-linked resin foam may also contain both of flame retardant(s) and powder particles other than flame retardants.

Of powdery flame retardants, inorganic flame retardants are preferred as the flame retardants. The inorganic flame retardants may be brominated flame retardants, chlorinated flame retardants, phosphorus flame retardants, and antimony flame retardants. However, non-halogen non-antimony inorganic flame retardants are preferably used herein. This is because the chlorinated or brominated flame retardants upon combustion emit a gas component which is harmful to the human body and corrodes machines, whereas the phosphorus or antimony flame retardants also have problems typically of harmfulness and explosiveness. Exemplary non-halogen non-antimony inorganic flame retardants include aluminum hydroxide, magnesium hydroxide, magnesium oxide/nickel oxide hydrates, magnesium oxide/zinc oxide hydrates, and other hydrated metallic compounds. Such hydrated metal oxides may have undergone a surface treatment. Each of different flame retardants may be used alone or in combination.

Though not critical, the content of flame retardants, if used, may be suitably chosen within the range typically of from 5 to 150 percent by weight, and preferably from 10 to 120 percent by weight, based on the total amount of the resin composition. Excessively low contents thereof may result in reduced flame retardancy, while excessively high contents thereof may result in difficulties in obtaining a highly expanded cross-linked resin foam.

The resin composition may further contain additives according to necessity. The additives to be incorporated into the resin according to necessity are not particularly limited in type, and various additives in ordinary use for foam molding may be used. Exemplary additives include foaming nucleators, crystal nucleators, plasticizer, lubricants, colorants (e.g., pigments and dyestuffs), ultraviolet absorbers, antioxidants, age inhibitors, fillers, reinforcing agents, antistatic agents, surfactants, tension modifiers, shrinkage inhibitors, flowability improvers, clays, vulcanizing agents, surface-treating agents, and flame retardants each in another form than powdery form.

The amounts of such additives are not limited and may be such amounts as commonly used in the production of resin foams. The amounts may be suitably adjusted within ranges not disturbing the cross-linked resin foam according to the present invention to develop desired satisfactory properties such as strength, flexibility, and compressive strain recovery.

The resin composition may be prepared typically through mixing, kneading, or melting/mixing of components such as an elastomer, an active-energy-ray-curable compound, a thermal crosslinking agent, a photoinitiator, powder particles, and additives according to necessity. The way to prepare the resin composition, however, is not limited to this.

The resin composition for use in the present invention preferably has a strain hardening modulus $\alpha$ of from 0.5 to 1.5 as determined from an uniaxial elongational viscosity in uniaxial elongation at a foam-molding temperature and at a strain rate of 0.1 [l/s] and preferably has an elongational viscosity $\eta$ of from 26000 [Pa•s] to 600000 [Pa•s] 2.5 seconds after the uniaxial elongation and a strain $\varepsilon$ of from 1.3 to 3 in the uniaxial elongation. These ranges are preferred for giving a resin foam which excels in properties such as strength, flexibility, cushioning properties, and strain recovery, particularly has a cell structure resistance to shrinkage caused by restoring force of the resin, and thereby has a high expansion ratio.

Specifically, in a preferred embodiment of the present invention, the resin composition used for the preparation of the cross-linked resin foam is a resin composition containing an elastomer, an active-energy-ray-curable compound, and a thermal crosslinking agent, having a strain hardening modulus $\alpha$ of from 0.5 to 1.5 as determined from a uniaxial elongational viscosity in uniaxial elongation at a foam-molding temperature and a strain rate of 0.1 [l/s], and having an elongational viscosity $\eta$ of from 26000 [Pa•s] to 600000 [Pa•s] 2.5 seconds after the uniaxial elongation and a strain $\varepsilon$ of from 1.3 to 3 in the uniaxial elongation. The resin composition according to this embodiment is heated to form a cross-linked structure derived from the thermal crosslinking agent, the resulting cross-linked-structure-containing resin composition is subjected to foam molding to give a foamed structure, and the foamed structure is irradiated with an active energy ray to form another cross-linked structure derived from the active-energy-ray-curable compound to thereby give a cross-linked resin foam.

The strain hardening modulus $\alpha$ determined from the uniaxial elongational viscosity is an index showing how much the uniaxial elongational viscosity increases in a non-linear region in the measurement of the uniaxial elongational viscosity. Specifically, with an increasing strain, the uniaxial elongational viscosity gradually increases in a linear region after the initiation of measurement and then deviates from the linear region and sharply increases or rises in the non-linear region.

The strain hardening modulus $\alpha$ determined from the uniaxial elongational viscosity in uniaxial elongation at a strain rate of 0.1 [l/s] may be expressed as following expression (1):

[Math. 1]

$$\alpha = \frac{\log \eta_{max} - \log \eta_{0.2}}{\varepsilon_{max} - \varepsilon_{0.2}} \qquad (1)$$

wherein $\eta_{max}$ represents a highest elongational viscosity in the measurement of uniaxial elongational viscosity; $\eta_{0.2}$ represents an elongational viscosity at a strain $\varepsilon$ of 0.2; $\varepsilon_{max}$ represents a strain $\varepsilon$ at the time when the elongational viscosity reaches a maximum; and $\varepsilon_{0.2}$ represents a strain of 0.2.

In a preferred embodiment, the resin composition for use herein has a strain hardening modulus $\alpha$ of from 0.5 to 1.5, and preferably from 0.8 to 1.4 so as to give a foam (foamed structure or cross-linked resin foam) which has a high expansion ratio and does not undergo shrinkage after foaming or undergoes shrinkage, if any, at a low rate.

In another preferred embodiment, the resin composition for use herein has an $\varepsilon_{max}$ of from 1.3 to 3, and preferably from 1.3 to 2.8, at a foam-molding temperature. The resin composition, if having an $\varepsilon_{max}$ of less than 1.3, may be resistant to elongation and may thereby expand insufficiently. The resin composition, if having an $\varepsilon_{max}$ of more than 3, may cause cells (bubbles) to be coarse or to be broken and may thereby cause the foam to shrink, thus being undesirable.

In yet another preferred embodiment, the resin composition for use herein has an elongational viscosity $\eta$ of from 26000 [Pa•s] to 600000 [Pa•s], and preferably from 26000 [Pa•s] to 100000 [Pa•s], 2.5 seconds after the uniaxial elongation at a foam-molding temperature. The resin composition, if having an elongational viscosity of more than the above range, may cause the cells (bubbles) to be coarse or to be broken and may thereby cause the foam to shrink at once. In contrast, the resin composition, if having an elongational viscosity of less than the range, may fail to expand sufficiently, thus being undesirable.

For example, in an embodiment, the resin composition contains an acrylic thermoplastic elastomer, the polymerizable unsaturated compound, and an isocyanate compound as the thermal crosslinking agent. When the resin composition is cross-linked by heating, and the resulting cross-linked-structure-containing resin composition is subjected to foam molding at a temperature of 40°C to 80°C to form a foamed structure, the resin composition at the foam-molding temperature (40°C to 80°C) has a strain hardening modulus $\alpha$ of from about 0.8 to about 1.4 as determined from an uniaxial elongational viscosity in uniaxial elongation at a strain rate of 0.1 [l/s] and has an elongational viscosity $\eta$ of from about 26000 to about 100000 [Pa•s] 2.5 seconds after the uniaxial elongation and a strain $\varepsilon$ of from about 1.3 to about 2.8 in the uniaxial elongation.

(Cross-Linked-Structure-Containing Resin Composition)

The cross-linked-structure-containing resin composition is a resin composition obtained by heating the resin composition containing at least an elastomer, an active-energy-ray-curable compound, and a thermal crosslinking agent to form a cross-linked structure derived from the thermal crosslinking agent in the resin composition. The cross-linked-structure-containing resin composition includes the cross-linked structure derived from the thermal crosslinking agent. The cross-linked-structure-containing resin composition is subjected to foam molding to give a foamed structure.

The way to heat the resin composition is not limited, as long as a cross-linked structure may be formed from the thermal crosslinking agent in the resin composition. Typically, the resin composition may be heated by leaving stand at an ambient temperature of from 40°C to 150°C, preferably from 60°C to 140°C, and more preferably from 80°C to 130°C for a duration of from 1 minute to 10 hours, preferably from 3 minutes to 5 hours, and more preferably from 5 minutes to 1 hour. The ambient temperature as above may be obtained according to a known heating procedure such as heating with an electric heater, heating with an infrared ray or another electromagnetic wave, or heating on a water bath.

The cross-linked structure in the cross-linked-structure-containing resin composition is still maintained in the foamed structure which is obtained through foam molding of the cross-linked-structure-containing resin composition. The cross-linked resin foam according to the present invention therefore includes both a cross-linked structure derived from the thermal crosslinking agent and a cross-linked structure derived from the active-energy-ray-curable compound. Thus, the cross-linked resin foam advantageously has higher shape retention, is further resistant to deformation and shrinkage of the cell structure with time, and has a high expansion ratio.

(Foamed Structure)

The foamed structure may be obtained by subjecting the cross-linked-structure-containing resin composition to foam molding. The foamed structure structurally includes a cell structure (expanded structure, cellular structure) and also includes a cross-linked structure derived from the thermal crosslinking agent. The foamed structure is further irradiated with an active energy ray to form another cross-linked structure derived from the active-energy-ray-curable compound and thereby yields the cross-linked resin foam according to the present invention. The parameters or conditions of the foamed structure, such as thickness and shape, are not critical and may be chosen suitably according to necessity.

A blowing agent may be used in foam molding of the cross-linked-structure-containing resin composition. The blowing agent is not limited, as long as being a gas at ordinary temperature and normal atmospheric pressure and being inert to but impregnatable into the elastomer. A gas as the blowing agent is generally used as a high-pressure gas for obtaining a satisfactory impregnation rate.

Exemplary high-pressure gases as the blowing agent for use in the formation of the cross-linked resin foam include rare gases such as helium and argon; carbon dioxide; nitrogen; and air. Such gases may be used in combination as a mixture. Of these, carbon dioxide or nitrogen is advantageously usable, because these gases may be impregnated in a large amount at a high rate into the elastomer used as a raw material for the foam.

From the viewpoint of increasing the rate of impregnation into the elastomer, the high-pressure gas (especially carbon dioxide or nitrogen) is preferably a fluid in a supercritical state. Such a gas in a supercritical state (supercritical fluid) shows increased solubility in the elastomer and can be incorporated therein in a higher concentration. In addition, because of its high concentration, the supercritical gas generates a larger number of cell nuclei upon an abrupt pressure drop (decompression) after impregnation. The cell nuclei grow to give cells, which are present in a higher density than in a foam having the same porosity but produced with the gas in another state. Consequently, use of a supercritical gas may give fine cells. The critical temperature and critical pressure of carbon dioxide are 31°C and 7.4 MPa, respectively.

The foam molding of the cross-linked-structure-containing resin composition to form a foamed structure may be performed according to a batch system or continuous system. In the batch system, the cross-linked-structure-containing resin composition is previously molded or shaped into an unfoamed resin molded article (unfoamed molded article) in a suitable form such as a sheet form; the unfoamed resin molded article is impregnated with a high-pressure gas as the blowing agent and is then released from the pressure to allow the molded article to foam (to expand). In the continuous system, molding and foaming are performed simultaneously, in which the cross-linked-structure-containing resin composition is kneaded together with a high-pressure gas as the blowing agent under a pressure (under a load); the kneaded mixture (kneadate) is molded into a molded article and, simultaneously, is released from the pressure (decompressed). As has been described, a high-pressure gas may be impregnated into an unfoamed resin molded article which has been molded beforehand; or it may be impregnated into a molten cross-linked-structure-containing resin composition under a pressure, and the resulting molten article is molded simultaneously with decompression.

Specifically, examples of the way to produce a foamed structure according to a batch system will be illustrated below. Initially, the cross-linked-structure-containing resin composition (composition for the formation of foamed structure) is extruded with an extruder such as a single-screw extruder or twin-screw extruder to thereby produce an unfoamed resin molded article. Alternatively, the cross-linked-structure-containing resin composition is uniformly kneaded beforehand using a kneading machine equipped with one or more blades typically of a roller, cam, kneader, or Banbury type, and the resulting mixture (kneadate) is press-molded typically with a hot-plate press to thereby produce an unfoamed resin molded article having a predetermined thickness. Further alternatively, the cross-linked-structure-containing resin composition is molded using an injection molding machine. The molding (forming) may be performed according to a suitable procedure to give a molded article having a desired shape and thickness. The unfoamed resin molded article (molded article derived from the cross-linked-structure-containing resin composition) thus obtained is subjected to the steps of gas impregnation, decompression, and, where necessary, heating to form cells in the elastomer. In the gas impregnation step, the unfoamed resin molded article is placed in a pressure-tight vessel, and a high-pressure gas, such as carbon dioxide or nitrogen, is injected into the vessel and impregnated into the unfoamed resin molded article. In the decompression step, at the time when the high-pressure gas has been sufficiently impregnated, the unfoamed resin molded article is released from the pressure (the pressure is usually lowered to atmospheric pressure) to thereby generate cell nuclei in the elastomer. In the heating step, the cell nuclei are allowed to grow through heating according to necessity. Alternatively, the cell nuclei may be allowed to grow at room temperature without providing the heating step. After the cells are allowed to grow in the above manner, the article is, according to necessity, rapidly cooled typically with cold water to fix its shape to thereby yield a foamed structure constituting a cross-linked resin foam according to an embodiment of the present invention. The unfoamed resin molded article is not limited in shape and may be in any form such as a roll or plate (sheet) form. The injection of the high-pressure gas may be performed continuously or discontinuously. The heating for the growth of cells can be performed according to a known or common procedure such as heating with a water bath, oil bath, hot roll, hot-air oven, far-infrared rays, near-infrared rays, or microwaves. Though extrusion molding, press molding, and injection molding have been exemplified as molding techniques, the unfoamed resin molded article to be expanded may be produced according to other molding techniques.

Examples of the way to produce a foamed structure according to a continuous system will be illustrated below. The foamed structure may be produced through a kneading/impregnation step and a molding/decompression step. In the kneading/impregnation step, the cross-linked-structure-containing resin composition is kneaded with an extruder such as a single-screw extruder or twin-screw extruder, and during this kneading, a high-pressure gas, such as carbon dioxide or nitrogen, is injected (introduced) into the kneader and sufficiently impregnated into the elastomer (thermoplastic resin). In the subsequent molding/decompression step, molding and foaming are performed simultaneously. Specifically, the cross-linked-structure-containing resin composition is extruded typically through a die arranged at a distal end of the extruder and thereby released from the pressure (the pressure is usually lowered to atmospheric pressure) to grow cells. In some cases (where necessary), a heating step may be further provided to enhance cell growth by heating. After cells are thus allowed to grow, the extrudate is, according to necessity, rapidly cooled typically with cold water to fix the shape and thereby give a foamed structure for the formation of the cross-linked resin foam according to the present invention. The kneading/impregnation step and the molding/decompression step may be conducted with another molding machine such as injection molding machine than extruders. The procedure herein may be chosen so as to obtain a foamed structure of a sheet, prismatic, or another arbitrary form.

Though not critical, the amount of the high-pressure gas to be incorporated is typically from about 2 to about 10 percent by weight relative to the total amount of the elastomer component. The incorporation of the high-pressure gas may be suitably controlled to obtain desired parameters or conditions such as density and expansion ratio.

The pressure at which a high-pressure gas is impregnated into the unfoamed resin molded article or cross-linked-structure-containing resin composition in the gas-impregnation step according to the batch system or in the kneading/impregnation step according to the continuous system may be appropriately chosen in consideration typically of the type of the high-pressure gas and the operability in impregnation procedure. Typically, when carbon dioxide is used as the high-pressure gas, the pressure may be 6 MPa or more (e.g., from about 6 to about 100 MPa), and preferably 8 MPa or more (e.g., from about 8 to about 100 MPa). If the pressure of the high-pressure gas is lower than 6 MPa, considerable cell growth may occur during foaming, and this may tend to result in too large cell diameters and hence in disadvantages such as insufficient dustproofing effect. The reasons for this are as follows. When impregnation is performed under a low pressure, the amount of the gas impregnated is relatively small, and cell nuclei grow at a lower rate as compared to impregnation under higher pressures. As a result, the number of cell nuclei formed is smaller. Because of this, the gas amount per cell increases rather than decreases, resulting in excessively large cell diameters. Furthermore, in a region of pressures lower than 6 MPa, only a slight change in impregnation pressure results in considerable changes in cell diameter and cell density, and this may often create difficulty in the control of cell diameter and cell density.

The temperature at which a high-pressure gas is impregnated into the unfoamed resin molded article or cross-linked-structure-containing resin composition in the gas-impregnation step according to the batch system or in the kneading/impregnation step according to the continuous system varies depending typically on the types of the high-pressure gas and elastomer and can be chosen within a wide range. When impregnation operability and other factors are taken into account, the impregnation temperature is, for example, from about 1.0°C to about 350°C. Typically, when a high-pressure gas is impregnated batchwise into an unfoamed resin molded article in a sheet form, the impregnation temperature is from about 10°C to about 200°C, and preferably from about 44 °C to about 200°C. When a high-pressure gas is injected into and kneaded with a cross-linked-structure-containing resin composition according to a continuous system, the impregnation temperature is generally from about 60°C to about 350°C. When carbon dioxide is used as a high-pressure gas, the impregnation is performed at a temperature (impregnation temperature) of preferably 32°C or higher, and especially preferably 40°C or higher, in order to maintain its supercritical state.

Though not critical, the decompression rate in the decompression step is preferably from about 5 to about 300 MPa/second, for obtaining uniform fine cells. The heating temperature in the heating step is, for example, from about 40°C to about 250°C, and preferably from about 60°C to about 250°C.

The process for producing a foamed structure gives a foamed structure with a high expansion ratio, and this advantageously gives a thick cross-linked resin foam. The process has the following advantages. Typically, when a foamed structure is produced according to the continuous system, it is necessary to regulate the gap in the die at the tip of the extruder so as to be as narrow as possible (generally from 0.1 to 1.0 mm) for maintaining the pressure in the extruder during the kneading/impregnation step. This means that, for obtaining a thick foamed structure, the cross-linked-structure-containing resin composition extruded through such a narrow gap should be foamed or expanded at a high expansion ratio. According to customary techniques, however, such a high expansion ratio is not obtained, and the resulting foamed structure has been limited to thin one (e.g., one having a thickness of from about 0.5 to about 2.0 mm). In contrast, the process using a high-pressure gas can continuously produce foamed structures as foams each having a final thickness of from 0.50 to 5.00 mm. To obtain such a thick cross-linked resin foam, the foamed structure may have a relative density [(density of the foamed structure after foaming)/(density of the unfoamed molded article)] of desirably from 0.02 to 0.3, and preferably from 0.05 to 0.25. The foamed structure, if having a relative density of more than 0.3, may be undesirable because of insufficient foaming (expansion), whereas the foamed structure, if having a relative density of less than 0.02, may be undesirable because of considerably reduced strength.

The dimensions, such as shape and thickness, of the foamed structure are not critical and may be chosen suitably according to the intended use of a cross-linked resin foam to be formed through irradiation of the foamed structure with an active energy ray. The foamed structure produced according to the above process may be processed so as to have various dimensions such as shape and thickness prior to the irradiation with an active energy ray and/or prior to heating each for the formation of a cross-linked structure.

(Cross-Linked Resin Foam)

A cross-linked resin foam according to an embodiment of the present invention may be obtained by subjecting the cross-linked-structure-containing resin composition to foam molding to give a foamed structure; and irradiating the foamed structure with an active energy ray to form a cross-linked structure derived from the active-energy-ray-curable compound in the foamed structure. In another embodiment, the foamed structure after the irradiation with an active energy ray may be further heated according to necessity. The resulting cross-linked resin foam includes both a cross-linked structure derived from the thermal crosslinking agent and another cross-linked structure derived from the active-energy-ray-curable compound and may thereby satisfactorily maintain its shape, is resistant to deformation or shrinkage of the cell structure in the foam with time. In particular, the cross-linked resin foam has a cell structure resistant to shrinkage caused by restoring force of the resin and can thereby maintain a high expansion ratio achieved by foaming.

Heating, when performed according to necessity after the irradiation with an active energy ray, may be performed typically by leaving the irradiated foamed structure stand at an ambient temperature of from 40°C to 150°C, preferably from 60°C to 140°C, and more preferably from 80°C to 130°C for a duration of from 10 minutes to 10 hours, preferably from 30 minutes to 8 hours, and more preferably from 1 to 5 hours. The ambient temperature as above may be obtained according to a known heating procedure such as heating with an electric heater, heating with an infrared ray or another electromagnetic wave, or heating on a water bath.

Exemplary active energy rays include ionizing radiations such as alpha rays, beta rays, gamma rays, neutron beams, and electron beams; and ultraviolet rays. Among them, ultraviolet rays are preferably employed. The energy, duration, procedure, and other conditions for the irradiation with the active energy ray are not especially limited, as long as a cross-linked structure derived from the active-energy-ray-curable compound can be formed. Typically, when the foamed structure is in a sheet form and an ultraviolet ray is used as the active energy ray, the irradiation with the active energy ray may be performed, for example, by irradiating one side of the sheet foamed structure with an ultraviolet ray (irradiation energy: 750 mJ/cm$^2$) and then irradiating the other side with the ultraviolet ray (irradiation energy: 750 mJ/cm$^2$).

Though not critical, the cross-linked resin foam has a density (apparent density) of preferably from 0.01 to 0.2 g/cm$^3$, and more preferably from 0.02 to 0.08 g/cm$^3$. The cross-linked resin foam, when having a density within this range, may have suitable strength and flexibility, excels in cushioning properties, and exhibits satisfactory strain recovery. The cross-linked resin foam, if having a density of less than 0.01 g/cm$^3$, may be excessively flexible; whereas the cross-linked resin foam, if having a density of more than 0.2 g/cm$^3$, may be excessively hard, thus being undesirable.

The density of the cross-linked resin foam (or foamed structure) may be determined typically in the following manner. Initially, the sample cross-linked resin foam (or foamed structure) is punched with a punching tool (punch die) 40 mm long and 40 mm wide to give a specimen, and the dimensions of the punched specimen are measured. Independently, the thickness of the punched specimen is measured with a 1/100 dial gauge having a diameter ($\varphi$) of measuring terminal of 20 mm. The volume of the punched specimen is calculated from these measured values. Next, the weight of the punched specimen is measured with an even balance having a minimum scale of 0.01 g or more. The density (g/cm$^3$) of the cross-linked resin foam (or foamed structure) is then calculated from these data.

The cross-linked resin foam is a foam with a high expansion ratio and has an expansion ratio of typically from 5 to 110 times, and preferably from 10 to 60 times. This is probably because the cross-linked resin foam includes both a cross-linked structure derived from the thermal crosslinking agent and another cross-linked structure derived from the active-energy-ray-curable compound, and this may suppress the shrinkage of the foamed structure after foam molding during its production.

The thickness, density, and other parameters of the cross-linked resin foam, and the thickness, density, relative density, and other parameters of the foamed structure may be controlled by suitably choosing or setting conditions according to the type of the high-pressure gas to be used, and the components of the elastomer to be used. Exemplary conditions herein include, in the preparation of the foamed structure, the temperature, pressure, duration, and other operation conditions in the gas-impregnation step or kneading/impregnation step; the decompression rate, temperature, pressure, and other operation conditions in the decompression step or molding/decompression step; the heating temperature in the heating step performed after the decompression step or after the molding/decompression step; and the amount of the high-pressure gas to be impregnated as the blowing agent.

The cross-linked resin foam preferably has a closed cell structure or semi-open/semi-closed cell structure as its cell structure. The semi-open/semi-closed cell structure is a cell structure containing both a closed cell moiety and an open cell moiety, and the ratio between the closed cell moiety and open cell moiety is not critical. The thermoplastic resin foam more preferably has such a cell structure that a closed cell moiety occupies 80% or more, and furthermore preferably 90% or more, of the resin foam.

The dimensions such as shape and thickness of the cross-linked resin foam are not critical and may be suitably chosen according typically to the intended use. For example, the thickness may be chosen within the range of from about 0.1 to about 3.0 mm, and preferably from about 0.2 to about 2.0 mm. Exemplary shapes of the foam include sheet form, tape form, and film form.

The cross-linked resin foam has a high expansion ratio and excels in cushioning properties. The cross-linked resin foam also satisfactorily retains its shape, is resistant to the deformation and shrinkage of the cell structure, and thereby shows satisfactory strain recovery.

A strain recovery rate (80°C, 50% compression set) in the present invention can be determined in the following manner. Fig. 1 is a diagram illustrating how to measure the strain recovery rate (80°C, 50% compression set). In Fig. 1, views 1a, 1b, and 1c illustrate how a sample and other components are before compressing to 50%, during compressing to 50%, and after release from compressing to 50% (after decompression), respectively; and reference numerals 11, 12, and 13 stand for a specimen (sample), a spacer, and a plate, respectively. The specimen 11 is prepared by molding a cross-linked resin foam into a sheet about 2 mm thick, and stacking five plies of the sheet. Initially, the thickness "a" of the specimen 11 is accurately measured, and the thickness (height) "b" of the spacers 12 is set to be one-half the thickness "a." With reference to the view la of Fig. 1, the specimen 11 and the spacers 12 are arranged between two plates 13. A pressure is then applied perpendicularly to the plates 13 to compress until the thickness of the specimen 11 becomes equal to the thickness "b" of the spacers 12. These are stored at an ambient temperature of 80°C for 24 hours while maintaining the compression. Twenty-four (24) hours later, they are cooled to ordinary temperature while maintaining the compression. After being cooled to ordinary temperature, the specimen 11 is released from the compression (decompressed) and is left stand at ordinary temperature for 30 minutes. The view 1c of Fig. 1 illustrates how the specimen is after decompression. After being left stand at ordinary temperature for 30 minutes, the thickness "c" of the specimen 11 is measured. The measured data are substituted into the following calculation expression, and the resulting value is defined as the strain recovery rate (80°C, 50% compression set).

$$\text{Strain recovery rate (80°C, 50\% compression set) [\%]} =$$

$$(c-b)/(a-b) \times 100$$

The cross-linked resin foams excel in properties such as strength, flexibility, cushioning properties, and compressive strain recovery and also excel in strain recovery after being held under compression at high temperatures. Accordingly, the cross-linked resin foams are very useful, typically for electronic appliances, as internal insulators, cushioning materials, sound insulators, and heat insulators; as well as food packaging materials, clothing materials, and building materials.

EXAMPLES

The present invention will be illustrated in further detail with reference to several working examples below. It should be noted, however, that these examples are never construed to limit the scope of the present invention.

(EXAMPLE 1)

In a kneading machine equipped with blades of roller type (trade name "LABO PLASTOMILL" supplied by Toyo Seiki Seisaku-Sho, Ltd.), 100 parts by weight of an acrylic elastomer (trade name "Rheocoat R-1020" supplied by Toray Coatex Co., Ltd.) was kneaded at a temperature of 80°C; and 100 parts by weight of a multifunctional acrylate (trade name "M309" supplied by Toagosei Co., Ltd.) was added thereto, followed by kneading at a temperature of 80°C. The acrylic elastomer included units derived from butyl acrylate (BA), acrylonitrile (AN), and acrylic acid (AA) and had a composition (by weight) of BA:AN:AA of 85:15:2. Next, 4 parts by weight of an isocyanurate-based hexamethylene diisocyanate cyclic trimer (trade name "CORONATE HX" supplied by Nippon Polyurethane Industry Co., Ltd.) as a thermal crosslinking agent was added, followed by kneading at a temperature of 80°C.

The resulting kneadate was combined with 3 parts by weight of bis(2,4,6-trimethylbenzoyl)-phenylphosphine oxide (trade name "IRGACURE 819" supplied by Ciba Specialty Chemicals Corporation) as a photoinitiator, was further kneaded at a temperature of 80°C for 5 minutes, and thereby yielded a composition (resin composition).

The resin composition was molded using a hot-plate press heated to 80°C and thereby yielded an unfoamed resin molded article in the form of a sheet having a thickness of 1 mm.

The unfoamed resin molded article was placed in a pressure-tight vessel and impregnated with carbon dioxide by holding at an ambient temperature of 60°C and a pressure of 10 MPa/cm$^2$ for 20 minutes. Twenty (20) minutes into the pressurization, the impregnated article was subjected to rapid decompression so as to expand and thereby yielded a foamed structure.

The foamed structure was irradiated with an ultraviolet ray on one side after the other (irradiation energy per one side: 750 mJ/cm$^2$) to form a cross-linked structure and thereby yielded a foam.

The resulting foam had an expansion ratio of 40 times and did not suffer from shrinkage before and after the ultraviolet ray irradiation.

(EXAMPLE 2)

A foam was prepared by the procedure of Example 1, except for using, instead of the acrylic elastomer (trade name "Rheocoat R-1020" supplied by Toray Coatex Co., Ltd.), 100 parts by weight of a polymer including units derived from butyl acrylate (BA), acrylonitrile (AN), and acrylic acid (AA) and corresponding to the acrylic elastomer, except using acrylic acid in an amount of 2 times in polymerization, and having a composition (by weight) of BA:AN:AA of 85:15:4. The resulting foam had an expansion ratio of 31 times and did not suffer from shrinkage before and after the ultraviolet ray irradiation.

(EXAMPLE 3)

A foam was prepared by the procedure of Example 1, except for using, instead of the acrylic elastomer (trade name "Rheocoat R-1020" supplied by Toray Coatex Co., Ltd.), 100 parts by weight of a polymer including units derived from butyl acrylate (BA), acrylonitrile (AN), and acrylic acid (AA) and corresponding to the acrylic elastomer, except using acrylic acid in an amount of 3 times in polymerization, and having a composition (by weight) of BA:AN:AA of 85:15:6. The resulting foam had an expansion ratio of 28 times and did not suffer from shrinkage before and after the ultraviolet ray irradiation.

(EXAMPLE 4)

A foam was prepared by the procedure of Example 1, except for using, instead of the acrylic elastomer, 100 parts by weight of a polymer including units derived from butyl acrylate (BA), isobornyl acrylate (IBXA), and 4-hydroxybutyl acrylate (4HBA) as monomer components and having a composition (by weight) of BA:IBXA:4HBA of 75:25:10; and except for using, instead of the thermal crosslinking agent, 4 parts by weight of an oligomeric isocyanurate compound (trade name "DURANATE TSE-100", having a weight-average molecular weight Mw of 6200, supplied by Asahi Kasei Corporation).

The resulting foam had an expansion ratio of 11 times and did not suffer from shrinkage before and after the ultraviolet ray irradiation.

(EXAMPLE 5)

A foam was prepared by the procedure of Example 1, except for using, instead of the acrylic elastomer (trade name "Rheocoat R-1020" supplied by Toray Coatex Co., Ltd.), 100 parts by weight of a polymer including units derived from butyl acrylate (BA), acrylonitrile (AN), and acrylic acid (AA) and corresponding to the acrylic elastomer, except using acrylic acid in an amount of 2 times in polymerization, and having a composition (by weight) of BA:AN:AA of 85: 15:4; and except for using the thermal crosslinking agent, i.e., isocyanurate-based hexamethylene diisocyanate cyclic trimer (trade name "CORONATE HX" supplied by Nippon Polyurethane Industry Co., Ltd.) in an amount of 8 parts by weight.

The resulting foam had an expansion ratio of 14 times and did not suffer from shrinkage before and after the ultraviolet ray irradiation.

(Comparative Example 1)

A foam was prepared by the procedure of Example 1, except for not using the thermal crosslinking agent, i.e.,

isocyanurate-based hexamethylene diisocyanate cyclic trimer (trade name "CORONATE HX" supplied by Nippon Polyurethane Industry Co., Ltd.).
The resulting foam had foamed only slightly and had expanded hardly.

(Comparative Example 2)

A foam was prepared by the procedure of Example 1, except for using, instead of the acrylic elastomer, 100 parts by weight of a polymer including units derived from butyl acrylate (BA), isobornyl acrylate (IBXA), and 4-hydroxybutyl acrylate (4HBA) as monomer components and having a composition (by weight) of BA:IBXA:4HBA of 75:25:2; except for using the multifunctional acrylate (trade name "M309" supplied by Toagosei Co., Ltd.) in an amount of 50 parts by weight; and except for using, instead of the thermal crosslinking agent, 2 parts by weight of 2-methacryloylethyl isocyanate (trade name "Karenz MOI" supplied by Showa Denko K.K.).
The resulting foam significantly shrank immediately after expansion. Specifically, the foam shrank within 30 seconds elapsed between the retrieval of the foam from the pressure-tight vessel and the irradiation with an ultraviolet ray and thereby failed to have a high expansion ratio.

(Evaluations)

The foams obtained according to the examples and comparative examples were evaluated through density measurement, expansion ratio measurement, uniaxial elongational viscosity measurement, strain recovery rate (80°C, 50% compression set) measurement, and shrinkage evaluation. The results are shown in Table 1.

(Method for Density Measurement)

The density (apparent density) of a sample foam was determined by measuring the specific gravity of the foam with an electronic densitometer (trade name "MD-200S" supplied by Alpha Mirage Co., Ltd.). The measurement of density was performed after the foam (foamed structure) was prepared and then stored at room temperature for 24 hours.

(Method for Expansion Ratio Measurement)

The expansion ratio of a sample foam was determined according to the following equation:

$$\text{Expansion ratio (times)} = (\text{specific gravity before foam molding})/(\text{specific gravity after foam molding})$$

The specific gravities were determined by performing specific gravity measurement with an electronic densitometer (trade name "MD-200S" supplied by Alpha Mirage Co., Ltd.).

(Shrinkage Evaluation)

In the examples and comparative examples, it took about 30 seconds from the retrieval of the foamed structure from the pressure-tight vessel after foaming to the irradiation of the foamed structure with an ultraviolet ray (UV), which foamed structure had been obtained by placing the unfoamed resin molded article in the pressure-tight vessel and allowing the unfoamed resin molded article to foam (to expand).
If the foamed structure shrank before the irradiation with an ultraviolet ray in the examples and comparative examples, the resulting foam after irradiation may not maintain a high expansion ratio, because the foamed structure was irradiated with an ultraviolet ray to further react the active-energy-ray-curable compound to thereby form another cross-linked structure.
Whether samples shrank or not within 30 seconds from the retrieval of the foamed structure from the pressure-tight vessel to the irradiation with an ultraviolet ray was determined through visual observation and based on the expansion ratio. A sample, which shrank to approximately half the initial expansion ratio, was evaluated as suffering from "shrinkage."
However, a sample foamed structure which significantly shrank was determined as suffering from "shrinkage" based on visual observation, because the foamed structure shrank before the measurement of an expansion ratio, the expansion ratio of the sample immediately after foaming (expansion) was immeasurable.
In contrast, a sample which did not shrink within 30 seconds from the retrieval of the foamed structure from the pressure-tight vessel to the irradiation with an ultraviolet ray and did not shrink even after irradiation with an ultraviolet ray was evaluated as suffering from "no shrinkage."
A sample which did not undergo foaming or expansion was unevaluable herein.

(Method for Uniaxial Elongational Viscosity Measurement)

In each of the examples and comparative examples, the resin composition was molded (hot-press formed) into a sheet 1 mm thick using a hot-plate press heated to 80°C, to give an unfoamed resin molded article (unfoamed resin sheet); and the unfoamed resin molded article was cut to give a specimen 10 mm in width, 20 mm in length, and 1 mm in thickness. The uniaxial elongational viscosity of the specimen was measured at a temperature of 60°C and a strain rate of 0.1 [1/S] with a uniaxial elongation viscometer (supplied by TA Instruments). Using elongational viscosities obtained in the measurement at a strain $\varepsilon$ of 0.2 and at an $\varepsilon_{max}$ (strain at the time when the elongational viscosity rises to a maximum), respectively, a strain hardening modulus $\alpha$ was determined according to the following equation:

$$\text{Strain hardening modulus } \alpha = (\log \eta_{max} - \log \eta_{0.2})/(\varepsilon_{max}/\varepsilon_{0.2})$$

[Method for Strain Recovery Rate (80°C, 50% compression set) Measurement]

A foam to be tested was cut into 2.5-mm square pieces, five plies of the cut pieces were stacked to give a test piece (corresponding to the specimen 11 in Fig. 1), and the thickness of the test piece was accurately measured. The measured thickness of the test piece was defined as a thickness "a" (corresponding to the thickness "a" in Fig, 1}. Using spacers (corresponding to the spacers 12 in Fig. 1) each having a thickness "b" (corresponding to the thickness "b" in Fig. 1) one-half the thickness of the test piece, the test piece was compressed to a thickness (thickness "b") corresponding to 50% of the initial thickness and, under this condition (corresponding to "during compressing to 50%" 1b in Fig. 1), was stored at a temperature of 80°C for 24 hours. Twenty-four (24) hours later, the test piece was cooled to ordinary temperature while maintaining under compression, and was then released from the compression (decompressed). The thickness of the test piece was accurately measured 30 minutes after the decompression and defined as a thickness "c" (corresponding to the thickness "c" in Fig. 1). The ratio of the recovered distance (recovered length) to the compressed distance (compressed length) is defined as a strain recovery rate (80°C, 50% compression set).

$$\text{Strain recovery rate (80°C, 50\% compression set) [\%]} = (c-b)/(a-b) \times 100$$

[Table 1]

| | $\varepsilon_{max}$ | Elongational viscosity $\eta$ 2.5 seconds later (Pa•s) | Strain hardening modulus $\alpha$ | Expansion ratio (times) | Shrinkage | Strain recovery rate (%) | Density (g/cm³) |
|---|---|---|---|---|---|---|---|
| Example 1 | 2.742 | 65843 | 0.966 | 40 | no shrinkage | 65 | 0.025 |
| Example 2 | 2.376 | 91233 | 1.036 | 31 | no shrinkage | 80 | 0.032 |
| Example 3 | 1.784 | 83635 | 1.119 | 28 | no shrinkage | 91 | 0.036 |
| Example 4 | 1.391 | 26393 | 1.387 | 11 | no shrinkage | 55 | 0.090 |

(continued)

|  | $\varepsilon_{max}$ | Elongational viscosity η 2.5 seconds later (Pa•s) | Strain hardening modulus α | Expansion ratio (times) | Shrinkage | Strain recovery rate (%) | Density (g/cm$^3$) |
|---|---|---|---|---|---|---|---|
| Example 5 | 2.379 | 68026 | 1.061 | 14 | no shrinkage | 75 | 0.071 |
| Com. Ex.1 | 2.473 | 44465 | 0.275 | 1.8 | shrinkage | 35 | 0.55 |
| Com. Ex.2 | 4.023 | 12316 | 0.848 | 5 | shrinkage | - | 0.20 |
| In Table 1, the symbol "-" indicates that the data was immeasurable or unevaluable. | | | | | | | |

Industrial Applicability

The cross-linked resin foams according to embodiments of the present invention excel in properties such as cushioning properties and compressive strain recovery (compression set recovery) and are applicable, typically for electronic appliances, as internal insulators, cushioning materials, sound insulators, and heat insulators; as well as food packaging materials, clothing materials, and building materials.

Reference Signs List

1a before compressing to 50%
1b during compressing to 50%
1c after release from compressing to 50%
11 specimen (test piece)
12 spacer
13 plate
a thickness of specimen 11 before compressing to 50%
b thickness of spacers 12 (half the thickness of specimen 11 before compressing to 50%)
c thickness of specimen 11 after compressing to 50%

**Claims**

1. A cross-linked resin foam obtained by heating a resin composition containing an elastomer, an active-energy-ray-curable compound, and a thermal crosslinking agent to form a cross-linked structure derived from the thermal crosslinking agent in the resin composition to thereby give a cross-linked-structure-containing resin composition; subjecting the cross-linked-structure-containing resin composition to foam molding to give a foamed structure; and irradiating the foamed structure with an active energy ray to form another cross-linked structure derived from the active-energy-ray-curable compound in the foamed structure to give the cross-linked resin foam.

2. The cross-linked resin foam according to claim 1, wherein the resin composition containing the elastomer, the active-energy-ray-curable compound, and the thermal crosslinking agent has a strain hardening modulus α of 0.5 to 1.5 as determined from a uniaxial elongational viscosity in uniaxial elongation at a foam-molding temperature and at a strain rate of 0.1 [1/s] and has an elongational viscosity η of from 26000 [Pa•s] to 600000 [Pa•s] 2.5 seconds after the uniaxial elongation and a strain ε of from 1.3 to 3 in the uniaxial elongation.

3. The cross-linked resin foam according to claim 1 or 2, wherein the cross-linked resin foam has a density of from 0.01 to 0.2 g/cm$^3$.

4. The cross-linked resin foam according to any one of claims 1 to 3, wherein the cross-linked resin foam has an expansion ratio of from 5 to 110 times.

5. The cross-linked resin foam according to any one of claims 1 to 4, wherein the foam molding of the cross-linked-structure-containing resin composition is performed by molding the cross-linked-structure-containing resin composition to give an unfoamed resin molded article, impregnating the unfoamed resin molded article with a blowing agent, and subjecting the impregnated unfoamed resin molded article to decompression to expand the unfoamed resin molded article.

6. The cross-linked resin foam according to any one of claims 1 to 5, wherein the thermal crosslinking agent is an isocyanate compound.

7. The cross-linked resin foam according to any one of claims 1 to 6, wherein carbon dioxide or nitrogen is used as a blowing agent in the foam molding of the cross-linked-structure-containing resin composition.

8. The cross-linked resin foam according to any one of claims 1 to 7, wherein a fluid in a supercritical state is used as a blowing agent in the foam molding of the cross-linked-structure-containing resin composition.

9. A process for producing a cross-linked resin foam, the process comprising the steps of heating a resin composition containing an elastomer, an active-energy-ray-curable compound, and a thermal crosslinking agent to form a cross-linked structure derived from the thermal crosslinking agent in the resin composition to give a cross-linked-structure-containing resin composition; subjecting the cross-linked-structure-containing resin composition to foam molding to give a foamed structure; and irradiating the foamed structure with an active energy ray to form another cross-linked structure derived from the active-energy-ray-curable compound in the foamed structure to give the cross-linked resin foam.

10. The process for producing a cross-linked resin foam according to claim 9, wherein the resin composition containing the elastomer, the active-energy-ray-curable compound, and the thermal crosslinking agent has a strain hardening modulus $\alpha$ of 0.5 to 1.5 as determined from a uniaxial elongational viscosity in uniaxial elongation at a foam-molding temperature and at a strain rate of 0.1 [1/s] and has an elongational viscosity $\eta$ of from 26000 [Pa•s] to 600000 [Pa•s] 2.5 seconds after the uniaxial elongation and a strain $\varepsilon$ of from 1.3 to 3 in the uniaxial elongation.

11. The process for producing a cross-linked resin foam according to claim 9 or 10, wherein the produced cross-linked resin foam has a density of from 0.01 to 0.2 $g/cm^3$.

12. The process for producing a cross-linked resin foam according to any one of claims 9 to 11, wherein the produced cross-linked resin foam has an expansion ratio of from 5 to 110 times.

13. The process for producing a cross-linked resin foam according to any one of claims 9 to 12, wherein the step of subjecting the cross-linked-structure-containing resin composition to foam molding is performed while using carbon dioxide or nitrogen as a blowing agent.

14. The process for producing a cross-linked resin foam according to any one of claims 9 to 13, wherein the step of subjecting the cross-linked-structure-containing resin composition to foam molding is performed while using a fluid in a supercritical state as a blowing agent.

[FIG. 1]

<table>
<tr><td colspan="2" align="center">**INTERNATIONAL SEARCH REPORT**</td><td colspan="2">International application No.<br>PCT/JP2010/050219</td></tr>
</table>

A. CLASSIFICATION OF SUBJECT MATTER
*C08J9/12*(2006.01)i

According to International Patent Classification (IPC) or to both national classification and IPC

B. FIELDS SEARCHED

Minimum documentation searched (classification system followed by classification symbols)
C08J9/12

Documentation searched other than minimum documentation to the extent that such documents are included in the fields searched

| | | |
|---|---|---|
| Jitsuyo Shinan Koho | 1922–1996 | Jitsuyo Shinan Toroku Koho 1996–2010 |
| Kokai Jitsuyo Shinan Koho | 1971–2010 | Toroku Jitsuyo Shinan Koho 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2008/149749 A1 (Nitto Denko Corp.),<br>11 December 2008 (11.12.2008),<br>paragraphs [0040] to [0043], [0084]; claims 1<br>to 8<br>(Family: none) | 1-14 |
| A | JP 2002-275299 A (Toray Industries, Inc.),<br>25 September 2002 (25.09.2002),<br>paragraphs [0025], [0026]<br>(Family: none) | 1-14 |
| A | JP 2001-240693 A (Sekisui Chemical Co., Ltd.),<br>04 September 2001 (04.09.2001),<br>paragraph [0003]<br>(Family: none) | 1-14 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 March, 2010 (19.03.10) | Date of mailing of the international search report<br>30 March, 2010 (30.03.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/050219

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-103895 A (Norton S.A. Performance Plastics),<br>11 April 2000 (11.04.2000),<br>paragraphs [0008], [0024], [0033]<br>& US 2005/0062184 A1     & EP 989157 A1<br>& FR 2783830 A          & PL 335597 A<br>& CZ 9903421 A         & CA 2281985 A<br>& KR 10-2000-0023411 A   & CA 2281985 A1 | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10168215 A